# FASCICULE DE BREVET EUROPEEN

(11) **EP 2 380 797 B1**
(45) Date de publication et mention de la délivrance du brevet: **13.03.2013**
(21) Numéro de dépôt: 11163000.0
(22) Date de dépôt: 19.04.2011
(51) Int. Cl.: B62D 1/185

(54) **Colonne de direction avec mécanisme de réglage télescopique et/ou fonction d'absorption d'énergie par rétraction**
Lenksäule mit teleskopischem Einstellmechanismus und/oder Energieabsorptionsfunktion beim Zurückziehen
Steering column with telescopic adjustment mechanism and/or energy-absorbing function by retraction

(30) Priorité: 20.04.2010 FR 1052974
(43) Date de publication de la demande: 26.10.2011
(73) Titulaire: JTEKT Europe, 69540 Irigny (FR)
(72) Inventeur: Bischoff, Philippe, 69360 Saint Symphorien d'Ozon (FR)
(74) Mandataire: Chevalier, Renaud Philippe

(56) Documents cités:
- EP-A1- 1 705 394
- EP-A2- 0 477 509
- EP-A2- 1 717 127

## Description

La présente invention se rapporte, d'une manière générale, aux systèmes de direction des véhicules automobiles. Cette invention s'intéresse plus précisément aux colonnes de direction et elle concerne, encore plus particulièrement, une colonne de direction de véhicule automobile pourvue d'un mécanisme de réglage télescopique et/ou d'une fonction d'absorption d'énergie par rétraction.

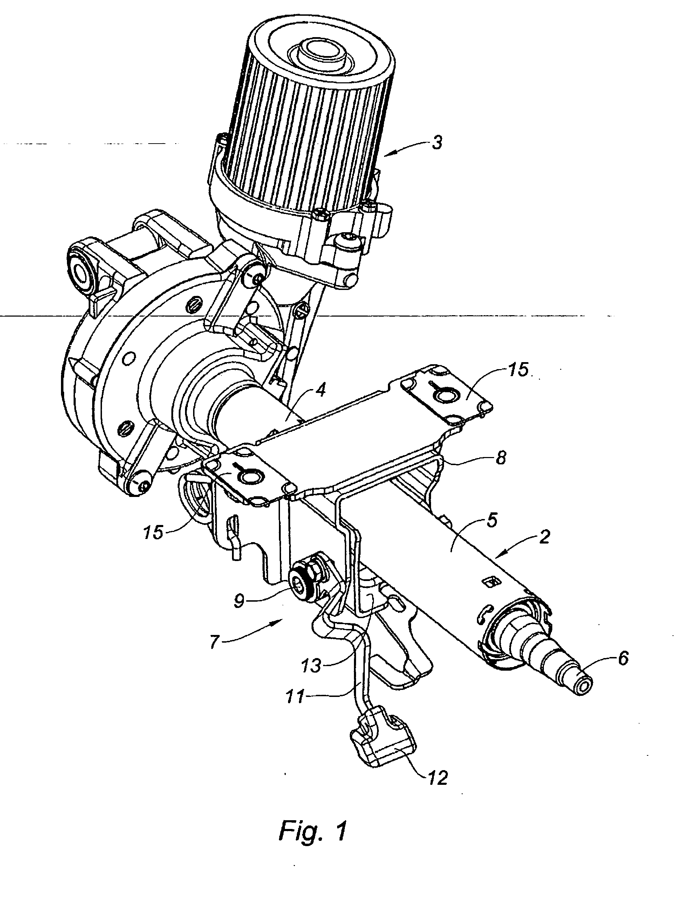

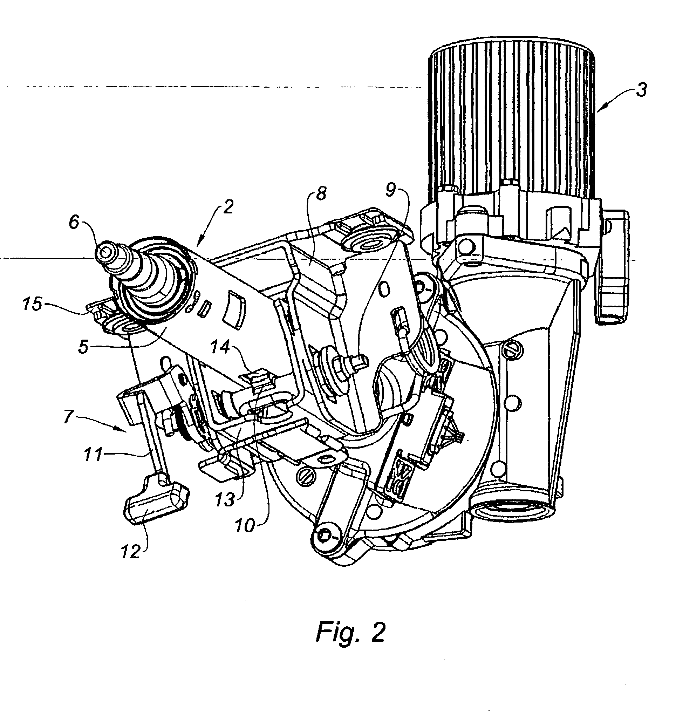

Les colonnes de direction qui équipent certains véhicules automobiles possèdent un mécanisme de réglage, qui permet de modifier la position du volant de conduite en hauteur et en profondeur, de manière à l'adapter au mieux aux mensurations du conducteur du véhicule, et à sa position de conduite. Un exemple de mécanisme de réglage d'une colonne de direction est illustré sur les figures 1 et 2 du dessin annexé, le mécanisme de réglage ici représenté étant appliqué à une colonne de direction 2 d'un véhicule avec dispositif d'assistance électrique 3 de la direction, le dispositif d'assistance 3 agissant sur de la partie basse de la colonne de direction 2.

Cette colonne de direction 2 comporte un tube intérieur 4 formant la partie basse de la colonne, et un tube extérieur 5 formant la partie haute de la colonne, au sommet de laquelle dépasse un élément 6 de liaison avec le volant de conduite (non représenté). Le tube extérieur 5 est monté coulissant axialement sur le tube intérieur 4, pour le réglage en profondeur de la position du volant, et/ou pour la rétraction de la colonne de direction 2 si celle-ci possède une fonction d'absorption d'énergie en cas de choc (comme précisé plus bas).

Le mécanisme de réglage, désigné dans son ensemble par la référence 7, est associé à une bride de fixation supérieure 8 de la colonne de direction 2. Ce mécanisme de réglage 7 comprend essentiellement un axe transversal 9, s'étendant sous le tube extérieur 5 ou sur ce tube et au travers de la bride 8, l'axe 9 portant dans sa partie centrale une came 10 et étant relié latéralement à un levier de commande 11 se terminant par une poignée 12.

L'axe transversal 9 du mécanisme de réglage 7 comporte une liaison de type glissière, sensiblement verticale, avec la bride de fixation supérieure 8 de la colonne de direction 2. Cet axe transversal 9 comporte une autre liaison de type glissière, parallèle à l'axe de la colonne de direction 2, avec une bride inférieure 13 qui est insérée dans la bride de fixation supérieure 8 et qui est solidaire du tube extérieur 5.

Le verrouillage de la colonne de direction 2, dans la position réglée, s'effectue en faisant pivoter le levier de commande 11 donc aussi l'axe transversal 9 jusqu'en butée, en créant ainsi par l'intermédiaire de cames, d'une part, un pincement entre la bride inférieure 13 et la bride de fixation supérieure 8, et d'autre part, une pression exercée par la came 10 sur le tube intérieur 4, au travers d'une ouverture 14 du tube extérieur 5. Le tube intérieur 4 vient alors en appui contre le tube extérieur 5. Le mécanisme 7 est ainsi bloqué en tous sens, ce qui permet de conserver la position réglée.

Comme l'illustrent aussi les figures 1 et 2, certaines colonnes de direction possèdent également une fonction d'absorption d'énergie en cas de choc subi par le véhicule. Cette fonction est réalisée par rétraction, notamment entre d'une part le tube extérieur 5 et la bride de fixation supérieure 8 de la colonne de direction 2 rendus solidaires l'un de l'autre par le verrouillage du mécanisme 7, et d'autre part un ensemble de cellules détachables 15 prévues aux points de fixation de la bride supérieure 8 sur le support de colonne de direction (non représenté) lié à la structure du véhicule. En particulier, si la liaison est glissante au niveau du mécanisme 7 c'est-à-dire si en position verrouillée l'effort axial de maintien du réglage télescopique est inférieur à l'effort de décrochement des cellules détachables 15, le tube extérieur 5 solidaire de la bride inférieure 13 vient d'abord en appui sur l'axe transversal 9, avant que les cellules détachables 15 se décrochent. La fonction de rétraction, ainsi réalisée, permet notamment en cas d'impact frontal du véhicule d'amortir le choc du conducteur sur le volant, par compression de la colonne de direction 2 sur une partie de sa longueur. L'absorption de l'énergie du choc est réalisée selon une courbe effort/déplacement à ajuster sur la base d'essais de choc effectués à l'aide d'un mannequin ; cette courbe est caractérisée en particulier par la valeur de l'effort de décrochement sur le début de la courbe, et par le rapport effort/déplacement sur le restant de la courbe.

Lorsqu'elles possèdent soit un mécanisme de réglage tel que décrit précédemment, soit une fonction de rétraction comme il vient d'être rappelé ou analogue, ou une combinaison des deux, les colonnes de direction existantes présentent un inconvénient de démanchement de colonne qui peut se manifester dans plusieurs situations.

Ainsi, pendant l'assemblage de la colonne de direction, et jusqu'à son montage final sur le véhicule, en passant par les différentes étapes de manipulation lors de l'emballage, du transport, du déchargement et de la préparation pour l'assemblage sur le véhicule, il existe un risque de démanchement. En particulier, si le mécanisme de réglage possède une liaison glissante, et si l'opérateur porte la colonne de direction par sa partie supérieure même en position verrouillée, le simple poids de la partie inférieure de la colonne de direction, incluant le réducteur du dispositif d'assistance et aussi l'ensemble moteur et calculateur de ce dispositif dans le cas d'un calculateur intégré, peut suffire à provoquer le démanchement de la colonne de direction. La partie inférieure de la colonne de direction peut ainsi tomber au sol et se trouver détériorée.

Si le mécanisme de réglage de la colonne de direction possède une liaison non glissante, autrement dit une liaison dite « positive », le risque de démanchement est plus limité mais ce risque existe malgré tout, si la colonne de direction est déverrouillée, que ce soit de manière intentionnelle ou accidentelle.

Lorsque la colonne de direction est installée et en service sur le véhicule, le risque de démanchement existe aussi, même lors d'un choc assez léger sur le volant. A ce moment, les cellules détachables peuvent se décrocher et, si le conducteur tire ensuite le volant vers lui, la partie supérieure de la colonne de direction qui est solidaire du volant peut se déconnecter de la partie inférieure, et cela rend le véhicule inconduisible, avec une mise en danger évidente.

Le document EP 1 717 127 A2 divulgue une colonne de direction télescopique selon le préambule de la revendication 1, pourvue d'un dispositif qui permet d'éviter le démanchement, par une butée qui limite la translation axiale entre la partie supérieure et la partie inférieure de la colonne de direction, cette butée étant réalisée par une zone déformée.

Le document EP 1 705 394 A1 divulgue lui aussi une colonne de direction télescopique utilisant des solutions de sertissage.

La présente invention vise à éviter cet inconvénient, et elle a donc pour but de fournir une solution simple et économique qui empêche le démanchement d'une colonne de direction du genre ici considéré, avec mécanisme de réglage télescopique et/ou avec fonction d'absorption d'énergie, notamment dans les situations précédemment évoquées.

A cet effet, l'invention a pour objet une colonne de direction de véhicule automobile pourvue d'un mécanisme de réglage télescopique et/ou d'une fonction d'absorption d'énergie par rétraction, la colonne de direction comprenant un tube intérieur et un tube extérieur monté coulissant axialement sur le tube intérieur, éventuellement un mécanisme de réglage apte à verrouiller ou déverrouiller la colonne de direction en bloquant ou libérant le tube intérieur relativement au tube extérieur, et un arbre rotatif télescopique s'étendant à l'intérieur de l'ensemble des deux tubes précités, cet arbre interne comprenant une partie inférieure et une partie supérieure tubulaire liées en rotation mais mobiles en translation axialement l'une relativement à l'autre, en particulier lors d'un réglage de la colonne de direction ou lors d'une rétraction pour absorption d'énergie, la partie supérieure de l'arbre étant liée en translation axialement au tube extérieur, la colonne de direction comportant, sur les deux parties de l'arbre interne télescopique, des moyens de butée qui coopèrent pour limiter la translation axiale de la partie supérieure relativement à la partie inférieure dans le sens de l'allongement de l'arbre, afin d'éviter le démanchement de la colonne de direction, cette colonne de direction étant caractérisée en ce que les moyens de butée comprennent, d'une part, un élément annulaire porté par l'extrémité inférieure de la partie supérieure tubulaire de l'arbre télescopique, l'élément annulaire étant constitué par un anneau élastique, inséré dans une gorge annulaire interne aménagée à l'extrémité inférieure de la partie supérieure tubulaire de l'arbre télescopique, et d'autre part, une face annulaire aménagée dans la zone supérieure de la partie inférieure dudit arbre, introduite dans la partie supérieure tubulaire, la butée se faisant par contact et appui de l'élément annulaire contre la face annulaire.

Ainsi, l'idée à la base de la présente invention consiste à modifier la structure de l'arbre interne télescopique de la colonne de direction, par l'ajout d'une butée qui limite la course de translation de la partie supérieure de cet arbre, elle-même liée en translation axialement au tube extérieur de la colonne de direction. Le risque de démanchement de la colonne de direction est donc évité efficacement, même si le mécanisme de réglage possède une liaison glissante ou se trouve déverrouillé. La solution proposée par l'invention est efficace aussi bien dans les phases de transport et de montage de la colonne de direction, qu'une fois cette colonne de direction en place sur le véhicule.

Avantageusement, l'extrémité inférieure de la partie supérieure tubulaire de l'arbre télescopique présente un évasement offrant la place nécessaire pour le passage de la partie inférieure de cet arbre et aussi pour insérer l'anneau élastique. Ce mode de réalisation utilise, en particulier, un anneau élastique fendu, du genre « Circlips ». Avec un tel mode de réalisation, particulièrement simple donc potentiellement économique, il reste possible de séparer les parties supérieure et inférieure de l'arbre, donc de rendre la colonne de direction entièrement démontable sans endommagement.

La face annulaire, aménagée dans la zone supérieure de la partie inférieure de l'arbre télescopique, est avantageusement une face plane usinée, en particulier une face dressée, sur laquelle peut venir en butée l' anneau élastique.

L'invention sera mieux comprise à l'aide de la description qui suit, en référence au dessin schématique annexé représentant, à titre d'exemple, une forme d'exécution de cette colonne de direction avec mécanisme de réglage télescopique :
Figures 1 et 2 (déjà mentionnées) sont des vues en perspective illustrant des mécanismes de réglage et d'absorption d'énergie selon l'état de la technique ;
Figure 3 est une vue en coupe passant par l'axe d'une colonne de direction conforme à la présente invention.

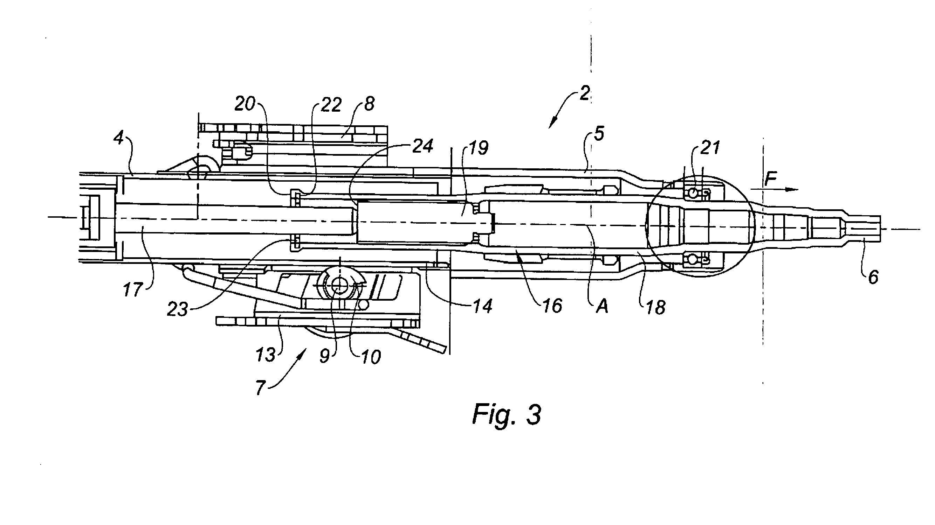

La figure 3 montre partiellement une colonne de direction 2 avec son mécanisme de réglage 7, les éléments correspondant à ceux précédemment décrits (en référence aux figures 1 et 2) étant désignés par les mêmes références numériques et ne faisant pas l'objet d'une nouvelle description.

Cette figure 3 montre aussi l'arbre interne télescopique 16 de la colonne de direction, arbre qui est logé dans l'ensemble tubulaire formé par le tube intérieur 4 et par le tube extérieur 5, l'arbre interne télescopique 16 étant rotatif autour de l'axe A dudit ensemble tubulaire.

L'arbre interne télescopique 16 se compose, lui-même, d'une partie inférieure 17 et d'une partie supérieure 18, qui sont liées en rotation mais mobiles en translation l'une relativement à l'autre, suivant l'axe A. La partie inférieure 17 de l'arbre 16estunepartie pleine, tandis que la partie supérieure 18 de cet arbre 16 est une partie tubulaire. Ainsi, la partie inférieure 17 possède une zone supérieure en forme de tête 19, engagée de manière coulissantedans la zone d'extrémité inférieure 20 de la partie supérieure 18. La zone d'extrémité supérieure de la partie supérieure 18 de l'arbre 16 forme l'élément 6 de liaison avec le volant. Un roulement 21 réalise une liaison en translation axiale entre la partie supérieure 18 de l'arbre 16, d'une part, et le tube extérieur 5, d'autre part, tout en permettant la rotation de l'arbre 16.

Des moyens de butée sont aménagés d'une part à l'extrémité inférieure 20 de la partie supérieure 18 tubulaire, et d'autre part sur la tête 19 de la partie inférieure 17 de l'arbre 16.

L'extrémité inférieure 20 de la partie supérieure 18 tubulaire, qui peut être évasée, comporte une gorge annulaire interne 22 dans laquelle est inséré un anneau élastique fendu 23, du genre « Circlips ».

La tête 19 de la partie inférieure 17 de l'arbre 16 présente une face annulaire 24, qui s'étend dans un plan perpendiculaire à l'axe A et qui est tournée vers l'anneau élastique 23. Le diamètre extérieur de la face annulaire 24 est plus grand que le diamètre intérieur de l'anneau élastique 23 à l'état monté. Cette face annulaire 24 peut être usinée par chariotage et dressage.

Ainsi, en cas de traction exercée sur le volant et transmise à l'arbre 16 par l'élément 6 de liaison, la partie supérieure 18 de l'arbre 16 se déplace en translation suivant l'axe A, relativement à la partie inférieure 17, dans le sens indiqué par une flèche F, mais ce mouvement est arrêté lorsque l'anneau élastique 23 vient au contact de la face annulaire 24. La butée ainsi créée arrête aussi en translation axiale le tube extérieur 5, compte tenu de la liaison en translation réalisée par le roulement 21, et ainsi le démanchement de la colonne de direction 2 se trouve évité. Cette fonction de butée est aussi réalisée si une partie de la colonne de direction 2 tend à se séparer de l'autre sous le seul effet de son poids.

Les moyens de butée ici ajoutés ne perturbent ni le fonctionnement normal de la colonne de direction 2, ni le réglage de cette colonne par le mécanisme 7.

On ne s'écarterait pas du cadre de l'invention, telle que définie par les revendications annexées :
- par des modifications de détail des formes, en particulier au niveau de l'extrémité inférieure de la partie supérieure tubulaire de l'arbre interne télescopique, par exemple en supprimant l'évasement si le diamètre de la partie inférieure de l'arbre est réduit ;
- en appliquant l'invention à des colonnes de direction dont le mécanisme de réglage ou le système d'absorption d'énergie par rétraction différeraient quelque peu de ceux ici décrits, l'axe du mécanisme de réglage pouvant par exemple passer sur le tube extérieur et non pas sous ce tube ;
- en destinant cette colonne de direction à des systèmes de direction de tous types, assistés ou non, et avec tout genre d'assistance électrique ou hydraulique dans le cas de directions assistées.

## Revendications

1. Colonne de direction de véhicule automobile pourvue d'un mécanisme de réglage télescopique et/ou d'une fonction d'absorption d'énergie par rétraction, la colonne de direction (2) comprenant un tube intérieur (4) et un tube extérieur (5) monté coulissant axialement sur le tube intérieur, éventuellement un mécanisme de réglage (7) apte à verrouiller ou déverrouiller
la colonne de direction (2) en bloquant ou libérant le tube intérieur (4) relativement au tube extérieur (5), et un arbre rotatif télescopique (16) s'étendant à l'intérieur de l'ensemble des deux tubes (4, 5) précités, cet arbre interne (16) comprenant une partie inférieure (17) et une partie supérieure (18) tubulaire liées en rotation mais mobiles en translation axialement l'une relativement à l'autre, en particulier lors du réglage de la colonne de direction ou lors de la rétraction par absorption d'énergie, la partie supérieure (18) de l'arbre (16) étant liée en translation axialement au tube extérieur (5), colonne dans laquelle sont prévus, sur les deux parties (17, 18) de l'arbre interne télescopique (16), des moyens de butée (23, 24) qui coopèrent pour limiter la translation axiale de la partie supérieure (18) relativement à la partie inférieure (17) dans le sens de l'allongement de l'arbre télescopique (16), afin d'éviter le démanchement de la colonne de direction (2), **caractérisée en ce que** les moyens de butée comprennent, d'une part, un élément annulaire (23) porté par l'extrémité inférieure (20) de la partie supérieure (18) tubulaire de l'arbre (16) télescopique, l'élément annulaire étant constitué par un anneau élastique (23), inséré dans une gorge annulaire interne (22) aménagée à l'extrémité inférieure (20) de la partie supérieure (18) tubulaire de l'arbre télescopique (16), et d'autre part, une face annulaire (24) aménagée dans la zone supérieure (19) de la partie inférieure (17) dudit arbre, introduite dans la partie supérieure (18) tubulaire, la butée se faisant par contact et appui de l'élément annulaire (23) contre la face annulaire (24).

2. Colonne de direction selon la revendication 1, **caractérisée en ce que** l'extrémité inférieure (20) de la partie supérieure (18) tubulaire de l'arbre télescopique (16) présente un évasement offrant la place nécessaire pour insérer l'anneau élastique (23).

3. Colonne de direction selon la revendication 1 ou 2, **caractérisée en ce que** l'anneau élastique (23) est un anneau élastique fendu, du genre « Circlips ».

4. Colonne de direction selon l'une quelconque des revendications 1 à 3, **caractérisée en ce que** la face annulaire (24), aménagée dans la zone supérieuRe (19) de la partie inférieure (17) de l'arbre télescopique (16), est une face plane usinée, en particulier une face dressée, sur laquelle peut venir en butée l'anneau élastique (23).

## Claims

1. A motor vehicle steering column provided with a telescoping adjustment mechanism and/or an energy absorption function by retraction, the steering column (2) comprising an inner tube (4) and an outer tube (5) axially slidingly mounted on the inner tube, possibly an adjustment mechanism (7) capable of locking or unlocking the steering column (2) by blocking or releasing the inner tube (4) relative to the outer tube (5), and a telescoping rotary shaft (16) extending to the inside of the assembly of the two aforementioned tubes (4, 5), said inner shaft (16) comprising a lower portion (17) and a tubular upper portion (18) rotatably connected but axially translationally movable relative to one another, in particular during adjustment of the steering column or retraction by energy absorption, the upper portion (18) of the shaft (16) being axially translatably connected to the outer tube (5), provided on which column are, on the two portions (17, 18) of the telescoping inner shaft (16), stop means (23, 24) that cooperate to limit the axial translation of the upper portion (18) relative to the lower portion (17) in the direction of elongation of the telescoping shaft (16), so as to prevent disconnection of the steering column (2), **characterized in that** the stop means comprise an annular element (23) supported by the lower end (20) of the tubular upper portion (18) of the telescoping shaft (16) on the one hand, the annular element being formed by an elastic ring (23), inserted into an inner annular groove (22) formed at the lower end (20) of the tubular upper portion (18) of the telescoping shaft (16), and on the other hand, an annular surface (24) formed in the upper area (19) of the lower portion (17) of said shaft, inserted into the tubular upper portion (18), the stop being made by contact and bearing of the annular element (23) against the annular surface (24).

2. The steering column according to claim 1, **characterized in that** the lower end (20) of the tubular upper portion (18) of the telescoping shaft (16) has a flare offering the necessary space to insert the elastic ring (23).

3. The steering column according to claim 1 or 2, **characterized in that** the elastic ring (23) is a slitted elastic ring, of the "circlips" type.

4. The steering column according to any one of claims 1 to 3, **characterized in that** the annular surface (24) formed in the upper area (19) of the lower portion (17) of the telescoping shaft (16) is a machined planar surface, in particular an upright surface, on which the elastic ring (23) can abut.

## Patentansprüche

1. Kraftfahrzeug-Lenksäule, die mit einem teleskopischen Einstellmechanismus und/oder einer Energieabsorptionsfunktion durch Zurückziehen ausgestattet ist, wobei die Lenksäule (2) ein inneres Rohr (4) und ein äußeres Rohr (5) umfasst, das axial gleitend auf dem inneren Rohr montiert ist, eventuell einen Einstellmechanismus (7), der imstande ist, die Lenksäule (2) durch Blockieren oder Freigeben des inneren Rohrs (4) im Verhältnis zum äußeren Rohr (5) zu verriegeln oder zu entriegeln, und eine teleskopische rotierende Welle (16), die sich in der Gruppe der zwei vorgenannten Rohre (4, 5) erstreckt, wobei diese innere Welle (16) einen unteren Abschnitt (17) und einen oberen Abschnitt (18) umfasst, die in Rotation verbunden, aber in Verschiebung zueinander bewegbar sind, insbesondere beim Einstellen der Lenksäule oder beim Zurückziehen durch Energieabsorption, wobei der obere Abschnitt (18) der Welle (16) mit dem äußeren Rohr (5) axial in Verschiebung verbunden ist, wobei in der Säule auf den zwei Abschnitten (17, 18) der inneren teleskopischen Welle (16) Anschlagmittel (23, 24) vorgesehen sind, die zusammenarbeiten, um die axiale Verschiebung des oberen Abschnitts (18) relativ zum unteren Abschnitt (17) in die Richtung der Verlängerung der Welle (16) zu begrenzen, um das Ausstecken der Lenksäule (2) zu vermeiden, **dadurch gekennzeichnet, dass** die Anschlagmittel einerseits ein ringförmiges Element (23), das von dem unteren Ende (20) des oberen rohrförmigen Abschnitts (18) der teleskopischen Welle (16) getragen wird, wobei das ringförmige Element aus einem elastischen Ring (23) besteht, der in eine innere ringförmige Nut (22) eingesetzt ist, die am unteren Ende (20) des oberen rohrförmigen Abschnitts (18) der teleskopischen Welle (16) eingearbeitet ist, und andererseits eine ringförmige Fläche (24), die in die obere Zone (19) des unteren Abschnitts (17) der Welle eingearbeitet ist, der in den oberen ringförmigen Abschnitt (18) eingeführt ist, umfasst, wobei der Anschlag durch Kontakt und Abstützung des ringförmigen Elements (23) auf der ringförmigen Fläche (24) erfolgt.

2. Lenksäule nach Anspruch 1, **dadurch gekennzeichnet, dass** das untere Ende (20) des oberen ringförmigen Abschnitts (18) der teleskopischen Welle (16) eine Erweiterung aufweist, die die notwendigen Platz bietet, um den elastischen Ring (23) einzusetzen.

3. Lenksäule nach Anspruch 1 oder 2, **dadurch gekennzeichnet, dass** der elastische Ring (23) ein gespaltener elastischer Ring in der Art eines Sprengrings ist.

4. Lenksäule nach einem der Ansprüche 1 bis 3, **dadurch gekennzeichnet, dass** die ringförmige Fläche (24), die in die obere Zone (19) des unteren Abschnitts (17) der teleskopischen Welle (16) eingearbeitet ist, eine bearbeitete ebene Fläche, insbesondere eine geschlichtete Fläche ist, auf der der elastische Ring (23) in Anschlag kommen kann.
